# EUROPEAN PATENT APPLICATION

(11) **EP 0 773 243 A1**
(43) Date of publication of application: **14.05.1997**
(21) Application number: 96307442.2
(22) Date of filing: 11.10.1996
(51) Int. Cl.: C08F 210/18, C08F 210/16, C08F 2/14, C08F 2/44, C08F 2/06

(54) **Process for the reduction of fouling in polymerisation reactions in liquid phase**

(30) Priority: 12.10.1995 US 542351
(71) Applicant: UNION CARBIDE CHEMICALS & PLASTICS TECHNOLOGY CORPORATION, Danbury, Connecticut 06817-0001 (US)
(72) Inventor: Joyce, William Helmer, Newtown, Connecticut 06470 (US); Williams, Gary Harry, Flemington, New Jersey 08822 (US)
(74) Representative: Allard, Susan Joyce

(57) **Abstract**

A slurry or a solution process for the polymerization of one or more alpha olefins and optionally, one or more diolefins comprising (i) admixing a slurry or solution ofthe alpha olefin and optional diolefin with an inert particulate material having a mean particle size in the ranged of about 0.1 to about 10 microns in an amount of at least about 0.3 percent by weight based on the total weight of the final polymer product produced; and (ii) contacting the mixture formed in step (i) with a catalyst system adapted to polymerize the alpha-olefin(s) and optional diolefin(s) in the mixture at a temperature and pressure sufficient to provide polymerization conditions.

## Description

### Field of the Invention

This invention relates to the reduction of polymer fouling and ease of handling a polymer product in subsequent operations.

### Background of the Invention

Four major processes are commercially used for the production of polymers --- gas phase polymerization, bulk monomer polymerization, solution polymerization and slurry polymerization. The latter three of these process types are liquid phase processes.

The polymers, which are produced with varying degrees of success by the aforementioned processes, are for the most part plastics such as polyethylenes, polypropylenes and polystyrenes and elastomers such as ethylene/propylene rubbers and ethylene/propylene diene termonomer rubbers, ethylene/propylene/ethylidene norbornene terpolymers of low density, high ethylene content propylene/ethylene block copolymers, poly (1-butene) when produced under certain reaction conditions,very low density (low modulus) polyethylenes, e.g., ethylene/butene rubbers or hexene containing terpolymers, and polybutadienes, polyisoprenes, styrene/butadiene rubbers, polystyrene rubbers, acrylonitrile/butadiene/styrene polymers, butadiene/acrylonitrile polymers, isobutylene/isoprene polymers, polychloroprenes, polysiloxanes, copolymers of ethylene and vinyltrimethoxy silane, and copolymers of ethylene and one or more of acrylonitrile, maleic acid esters, vinyl acetate, acrylic and methacrylic acid esters, and the like.

Although practiced commercially, these processes are plagued by numerous problems both small and large. One of the most significant problems encountered is fouling. Accordingly, industry is constantly seeking to improve on the processes, particularly the reduction of fouling.

### Summary of the Invention

An object of this invention, therefore, is to provide a process which eliminates or at least minimizes fouling. The application of this process in existing liquid processes can provide significant economic benefits in terms of improved operation of the apparatus before cleaning is required, reduced contamination of the product caused when built up material (fouling) from the reactor or downstream equipment breaks loose, and improvements in handling of the finished product both during production and in customer operations. The process of the present invention can provide a product which can be pelletized. Handling of a pelleted product would provide significant economic benefits during production, transport, and use of the product.

Other objects and advantages will become apparent hereinafter.

In accordance with the present invention, a process for the polymerization of a slurry or a solution of one or more alpha-olefins and optionally, one or more diolefins is provided, which process comprises:
(i) admixing the slurry or solution of one or more alpha-olefins and optionally one or more diolefins with an inert particulate material having a mean particle size in the range of about 0.1 to about 10 microns in an amount of at least about 0.3 percent by weight based on the total weight of the polymer produced; and
(ii) contacting the mixture formed in step (i) with a catalyst system adapted to polymerize the alpha-olefins and optionally one or more diolefins in the mixture at a temperature and pressure sufficient to provide polymerization conditions.

### Detailed Description of the Invention

The process of the present invention is carried out in the liquid phase.

The alpha-olefins which are useful in the subject process can have 2 to 12 carbon atoms and preferably have 2 to 8 carbon atoms. Useful diolefins can be acyclic or cyclic and can have 3 to 20 carbon atoms. Examples of these alpha-olefins and diolefins are ethylene, propylene, 1-butene, 1-hexene, 4-methyl-1-pentene, 1-octene, 1-decene, 1-dodecene, butadiene, hexadiene, styrene, isoprene, vinyl cyclohexene, dicyclopentadiene, isobutylene, ethylidene norbornene (ENB), polar vinyl monomers such as acrylonitrile, maleic acid esters, vinyl acetate, acrylate esters, methacrylate esters, vinyl trialkyl silanes, 1,4-pentadiene, 1,4-hexadiene, and cyclopentadiene.

The inert particulate material employed according to the present invention are materials which are chemically inert to the reaction. Examples of inert particulate materials include carbon black, silica, clays and other like materials. Carbon blacks are the preferred materials. The preferred carbon black material has a primary particle size of about 10 to 100 nanometers and an average or mean size of aggregate (primary structure) of about 0.1 to about 10 microns. Preferably, the specific surface area of the carbon black is about 30 to 1,500 m²/gm and displays a dibutylphthalate (DBP) absorption of about 80 to about 350 cc/100 grams.

The silica's which can be employed are amorphous silicas having a primary particle size of about 5 to 50 nanometers and an average size of aggregate of about 0.1 to about 10 microns. The average size of agglomerates of silica is about 2 to about 120 microns. The silicas employed generally have a specific surface area of about 50 to 500 m²/gm and a dibutylphthalate (DBP) absorption of about 100 to 400 cc/100 grams. The clays which can be employed according to the present invention generally have an average particle size of about 0.01 to about 10 microns and a specific surface area of about 3 to 30 m²/gm. The clays exhibit oil absorption of about 20 to about 100 gms per 100 gms.

The amount of inert particulate material utilized generally depends on the type of material utilized and the type of polymer produced. When utilizing carbon black or silica as the inert material, they can be employed in amounts of about 0.3 to about 50% by weight preferably about 5% to about 30% based on the weight of the final product produced. When clays are employed as the inert particulate material, the amount can range from about 0.3 to about 80% based on the weight of the final product preferably about 12% to 75% by weight.

The solution or slurry polymerization is conducted in a conventional manner provided that the temperature and pressure are sufficient to provide polymerization conditions.

The inert particulate material prevents excessive fouling. Typical temperatures are in the range of about 30°C to about 300°C and typical pressures -are in the range of about 100 to about 800 psia and preferably about 350 to about 600 psia.

The slurry or solution is formed and the polymerization is carried out in an organic solvent or diluent which must be inert towards the catalyst system used. Suitable solvents include, for example, aromatic, aliphatic, and cycloaliphatic hydrocarbons such as benzene, toluene, xylene, tetralin, decalin, butane, pentane, isopentane, n-hexane, isohexane, heptane, iso-octane, methyl-cyclo hexane, cyclohexane,and mixtures thereof. Other suitable solvents or diluents with the instant reaction system are halogenated hydrocarabons such as tetrachloroethylene, chlorobenzene, o-dichlorobenzene, and the like, as well as petroleum fractions free from polymerizable unsaturation.

The catalyst system can be any one of a number used in the polymerization of olefins such as those described in U.S. Patent Nos. 4,242,232; 4,298,713; 4,311,816; 4,101,445; 4,124,532; 4,414,132; 4,397,761; 4,607,019; 5,145,819; 5,272,236, and 5,317,036. The catalyst can be one that is soluble in the liquid, a catalyst system that is introduced into the liquid in slurry form, or as a solid supported or spray dried catalyst.

Advantages of the invention can be found in the reduction in fouling, improved reactor operability; and enhanced morphology of the resin. The final polymer product produced by the process of the present invention is selected from the group consisting of polyethylene; polypropylene; polystyrene; ethylene/propylene rubber; ethylene/propylene diene termonomer rubber; ethylene/propylene/ethylidene norbornene terpolymer of low density; high ethylene content propylene/ethylene block copolymer; poly (1-butene) when produced under certain reaction conditions; very low density (low modulus) polyethylene; ethylene/butene rubber; hexene containing terpolymer; polybutadiene; polyisoprene; styrene/butadiene rubber; polystyrene rubber; acrylonitrile/butadiene/styrene polymer; butadiene/acrylonitrile polymer; isobutylene/isoprene polymer; polychloroprene; polysiloxane; copolymers of ethylene and vinyltrimethoxy silane; and copolymers of ethylene and one or more of acrylonitrile, maleic acid esters, vinyl acetate, acrylic and methacrylic acid esters.

The invention is illustrated by the following examples.

### Example 1

A 150 milliliter, stirred, jacketed autoclave rated at 25,000 psig was used as a polymerization reactor. The reactor was equipped with an agitator, a low pressure separation pot and a vent. A tube for carbon black drying and charging was installed vertically above the reactor. It was operated in semi-continuous mode, i.e. the catalyst components were charged initially and the monomers were fed continuously on demand. Solid catalyst components were charged to an empty reactor at ambient temperature and pressure and liquid catalyst components were charged at reaction conditions from pressurized reservoirs attached to the reactor. Monomers were weighed in the desired ratio to a 10-liter feed tank maintained above 150 °C and pressurized above reactor pressure using Haskel pumps.

A catalyst precursor was prepared following the teaching of Beran et. al. (U.S. Patent No. 4,508,842) by impregnating vanadium trichloride into silica that was dehydrated at 600 °C to remove water and surface silanols. The vanadium trichloride was first dissolved in tetrahydrofuran, and the resulting solution was mixed with the dehydrated silica and dried at 70°C under nitrogen until free-flowing. The product was slurried in isopentane and treated with sufficient diethylaluminum chloride (DEAC) to provide a DEAC/V molar ratio of 4.5 after again drying under nitrogen to a free-flowing solid catalyst. A weighed amount of this catalyst containing 0.03 millimole of vanadium was sealed under nitrogen in a glass ampoule and mounted inside the reactor next to the agitator. The reactor was heated, purged with nitrogen and sealed.

The reactor was charged with 100 psi of hydrogen and 4 ml of ENB and pressurized to 100 psi at 110°C with a mixture of ethylene and propylene in a 4.3 C3/C2 molar ratio in 50 ml of isopentane solvent. Then 3 millimole each of a 25 wt% solution of triisobutylaluminum (TIBA) in hexane and a 1 molar solution of chloroform in hexane were charged from pressurized reservoirs attached to the reactor. The agitator was turned on, which broke the catalyst ampoule and initiated reaction. Pressure was maintained by feeding additional ethylene and propylene from the feed tank on demand. In cases where carbon black was used, it was charged and passivated before adding the hydrogen and monomers.

The reaction was continued for 60 minutes, although there was no further gas uptake after 30 minutes. The reactor was then cooled and vented through the separation pot in which the polymeric product precipitated, indicating it had been largely dissolved in the solution of monomers during the polymerization. The productivity was 1000 g of product per millimole of vanadium. Analysis indicated the product contained 50 wt% propylene and 3 wt% ENB, a molecular weight of 62,000 and was totally amorphous.

Several of the examples were repeated but carbon black "fluff" was added to the reactor and passivated by addition of alkyl. It was added after drying the system and before adding the other components. Typically the carbon black was dried for 12 hours before use in a vertical jacketed column externally heated to 150°C and purged with 150°C dry nitrogen. It was charged to the reactor all at once by gravity feed with mechanical agitation. A quantity of cocatalyst was charged to the system based on the amount of carbon black used. The quantity of cocatalyst was calculated using titration data from similarly dried carbon black.

### Examples 2-5

Example 1 was repeated at hydrogen partial pressures of 0, 50, and 200 psi with the following results:

| Example | Hydrogen (psig) | MW |
|---|---|---|
| 2 | 0 | 183,000 |
| 3 | 0 | 185,000 |
| 4 | 50 | 102,000 |
| 5 | 200 | <40,000 |

Example 2 left a solid polymer deposit amounting to about 2.5 grams on the walls of the reaction vessel and stirrer. When repeated with 2 grams of N650 carbon black (Example 3), no deposit is left on the reaction vessel.

### Examples 6-9

Example 1 was repeated except 8 ml of ENB was charged and the temperature and pressure were varied, with the following results:

| Example | Pressure (psig) | Temperature (°C) | Productivity (g/mmol V) |
|---|---|---|---|
| 6 | 15,000 | 80 | 548 |
| 7 | 20,000 | 80 | 652 |
| 8 | 20,000 | 110 | 1000 |
| 9 | 20,000 | 110 | 950 |

Example 8 left a polymer deposit amounting to about 1 gram on the walls of the reaction vessel and stirrer. When repeated with 2 grams of N550 carbon black (Example 9), no deposit is left on the reaction vessel.

### Examples 10-15

Example 1 was repeated except the C3/C2 molar ratio was varied, with the following results:

| Example | C3/C2 | Wt% C3 |
|---|---|---|
| 10 | 1.0 | 7 |
| 11 | 1.5 | 15 |
| 12 | 2.5 | 35 |
| 13 | | |
| 14 | 6.9 | 62 |
| 15 | | |

Example 12 left a rubbery deposit on the reactor surfaces of about 1.5 grams. When repeated (Example 13) with 2 grams of N330 carbon black, the reaction surfaces are clean.

Example 14 left a rubbery deposit of about 2 grams on the reactor wall. Repeating the procedure (Example 15) with 8 grams of N650 carbon black results in completely clean reactor and stirrer surfaces.

### Example 16

Example 1 was repeated except that 1-butene was substituted for propylene and the C4/C2 molar ratio was 5.0. The resulting product contained 66 wt% butene and had a molecular weight of 100,000.

Example 16 left a deposit amounting to 2.8 grams of product on the reactor walls. Repetition of the experiment with 8 grams of N650 carbon black results in a clean reaction system with no evidence of fouling.

In those cases where carbon black residue in the product is over about ten percent, the recovered product is noticeably less sticky and easier to work up with little sticking to equipment.

## Claims

1. A slurry or a solution process for the polymerization of one or more alpha-olefins and optionally, one or more diolefins, characterized in that:
(i) the slurry or solution of one or more alpha-olefins and optionally one or more diolefins is admixed with an inert particulate material having a mean particle size in the range of from 0.1 to 10 micrometres in an amount of at least 0.3 percent by weight based on the total weight of the polymer produced; and
(ii) the mixture formed in step (i) is contacted with a catalyst system adapted to polymerize the alpha-olefins and optionally one or more diolefins in the mixture.

2. A process as claimed in Claim 1 wherein the inert particulate material is carbon black, silica, clay, talc or a mixture thereof.

3. A process as claimed in Claim 2 wherein the inert particulate material is employed in an amount in the range of from 5 to 75 weight percent based upon the total amount of polymer formed.

4. A process as claimed in any one of the preceding claims wherein the alpha-olefins and diolefins are selected from ethylene, propylene, 1-butene, 1-hexene, 4-methyl-1-pentene, 1-octene, 1-decene, 1-dodecene, butadiene, hexadiene, styrene, isoprene, vinyl cyclohexene, dicyclopentadiene, isobutylene, ethylidene norbornene, polar vinyl monomers such as acrylonitrile, maleic acid esters, vinyl acetate, acrylate esters, methacrylate esters, vinyl trialkyl silanes, 1,4-pentadiene, 1,4-hexadiene, and cyclopentadiene.

5. A process as claimed in any one of the preceding claims wherein the solution or slurry is formed using a diluent selected from (i) aromatic, aliphatic, and cycloaliphatic hydrocarbons, (ii) halogenated hydrocarbons, and (iii) petroleum fractions free from polymerizable unsaturation.

6. A process as claimed in Claim 5 wherein the diluent is benzene, toluene, xylene, tetralin, decalin, butane, pentane, isopentane, n-hexane, isohexane, heptane, iso-octane, methyl-cyclo hexane, cyclohexane, tetrachloroethylene, chlorobenzene, o-dichlorobenzene or a mixture thereof.

7. A process of as claimed in any one of the preceding claims wherein the polymerization is conducted at a temperature in the range of from 30°C to 300°C and a pressure in the range of from 790 to 5613 kPa (100 psia to 800 psia).

8. A process of as claimed in any one of the preceding claims wherein the final polymer product is polyethylene; polypropylene; polystyrene; ethylene/ propylene rubber; ethylene/propylene diene termonomer rubber; ethylene/propylene/ethylidene norbornene terpolymer of low density; high ethylene content propylene/ethylene block copolymer; poly (1-butene) when produced under certain reaction conditions; very low density (low modulus) polyethylene; ethylene/ butene rubber; hexene containing terpolymer; polybutadiene; polyisoprene; styrene/butadiene rubber; polystyrene rubber; acrylonitrile/butadiene/styrene polymer; butadiene/acrylonitrile polymer; isobutylene/ isoprene polymer; polychloroprene; polysiloxane; a copolymer of ethylene and vinyltrimethoxy silane; or a copolymer of ethylene and one or more of acrylonitrile, maleic acid esters, vinyl acetate, acrylic or methacrylic acid esters.

9. A process as claimed in Claim 8 wherein the final polymer product is polyethylene; polypropylene; polystyrene; ethylene/propylene rubber; ethylene/ propylene diene termonomer rubber; ethylene/propylene/ ethylidene norbornene terpolymers of low density; polybutadiene; or polyisoprene.

10. A process as claimed in any one of the preceding claims wherein the inert particulate material is carbon black in an amount ranging from 0.3 to 50 percent by weight based on the weight of the final product produced.
